Europäisches Patentamt

European Patent Office

Office européen des brevets

(19)

(11) Publication number : **0 170 201 B2**

(12) ## NEW EUROPEAN PATENT SPECIFICATION

(45) Date of publication of the new patent specification : **09.09.92 Bulletin 92/37**

(51) Int. Cl.⁵ : **D06M 15/53,** D06M 15/643, C03C 25/02

(21) Application number : **85109269.2**

(22) Date of filing : **24.07.85**

(54) **Flexible, chemically treated bundles of fibers and process.**

(30) Priority : **30.07.84 US 635952**

(43) Date of publication of application : **05.02.86 Bulletin 86/06**

(45) Publication of the grant of the patent : **01.03.89 Bulletin 89/09**

(45) Mention of the opposition decision : **09.09.92 Bulletin 92/37**

(84) Designated Contracting States : **BE CH DE FR GB IT LI NL**

(56) References cited :
**EP-A- 0 104 555
EP-A- 0 171 670
US-A- 4 374 177
US-A- 4 390 647
Meyers Lexikon der Technik (1969), p. 724**

(73) Proprietor : **PPG INDUSTRIES, INC.
One PPG Place
Pittsburgh Pennsylvania 15272 (US)**

(72) Inventor : **Girgis, Mikhail Milad
113 Berwick Drive
Pittsburgh Pennsylvania 15215 (US)**
Inventor : **Lawton, Ernest Lindwood
4107 Lee Manor Drive
Allison Park Pennsylvania 15101 (US)**

(74) Representative : **Sternagel, Hans-Günther, Dr. et al
Patentanwälte Dr. Michael Hann Dr. H.-G.
Sternagel Sander Aue 30
W-5060 Bergisch Gladbach 2 (DE)**

EP 0 170 201 B2

Jouve, 18, rue Saint-Denis, 75001 PARIS

## Description

The present invention is directed to chemically treated bundles of fibers such as strands and yarns, which can be fabricated into myriad products including braided fabrics and fabrics which can be coated or laminated with polymeric films.

Glass fibers, which were originally developed in the 1930's, have been applied over the years as fibers, strands and yarns in numerous end uses such as textiles and reinforcement for polymeric matrices and rubber goods. Glass fibers are traditionally produced through attenuation from small orifices in a bushing of a glass batch melting furnace. The glass fibers issue forth from the orifices in molten streams and are cooled and treated with a sizing composition. The sizing composition is ordinarily an aqueous composition having components like coupling agents, lubricants and film forming polymers. EP-A-053 797 describes an aqueous coating or sizing composition for glass fibers having a solid, thermoplastic carboxylated, alkali-soluble polymer, plasticizing material, alkali material and viscous lubricating material and water. The sized glass fibers can be used for heat and flame resistant fabrics.

US-A-4,374,177 refers to an aqueous sizing composition for glass fibers comprising a polyurethane polymer, an epoxy polymer, a polyethylene containing polymer and a wax in a weight ratio of 25:1 to 1:25 and an aminosilane coupling agent and an epoxy silane coupling agent and/or a lubricant modified coupling agent.

The sized glass fibers are gathered into one or more bundles of fibers or strands and wound into a forming packet or chopped. For textile applications, the bundles of fibers in the forming packages can be twisted or false twisted or combined with other strands and twisted or false twisted to form yarns. In producing fabrics from the yarns, the yarns which will constitute the fill yarns are usually further treated with a slashing sizing composition so that they can undergo the rigors of weaving. Fabrics having the warp and weft yarns usually are heat-cleaned to remove both the forming and slashing sizing compositions. When the glass fiber strands from the forming packages are used for reinforcement of rubber goods, a second chemical treatment or coating is usually applied to the strands to make the strands or bundles of strands or cords compatible with the rubber matrix. This second coating is known in the industry as an RFL dip coating, where the term "RFL" means resorcinol formaldehyde latex coating and where the latex material includes a diene-containing elastomer to participate in the vulcanization of the rubber matrix.

EP-A-171 670 which shall be considered as state of art under Article 54(3) EPC is directed to a flexible bundle of sized filaments having a coating which is a moisture reduced residue of an aqueous coating and impregnating composition comprising a water dispersible or emulsifiable elastomeric ethylene-containing interpolymer formed from alkylene monomer and one or more specific polar comonomers, a resinous crosslinking material, a self crosslinking material in an amount to provide at least partial curing of the residue and water. The coated flexible bundles are used to produce polymeric coated fabrics.

Some of the outstanding properties of glass fibers that have fostered their growth in these numerous commercial applications include: relative nonflammability, heat and chemical resistances, excellent tensile and excellent dimensional stability. These advantageous characteristics of glass fibers have not been fully utilized in numerous textile fabrics because other fibers such as polyesters and nylons have much better flex fatigue characteristics than the glass fibers. Many textile fabrics could utilize the advantageous characteristics of glass fibers, if the glass fibers were more flexible and had a better flex fatigue characteristic like polyester and nylon textiles. A few examples include woven or knitted fabrics and nonwoven scrim and chemically coated textile fabrics useful in wall coverings, carpet backings, filter fabrics, tarpaulins, pond liners or pond covers, awnings, sail cloth, electrical sleevings and harnesses and the like.

For instance, textile fabrics of polyesters and polyamides such as nylon, aramide fibers like Kevla® fibers, rayon and other organic and even some inorganic man made fibers like griege glass fiber fabric, have been coated with polymers such as polyvinyl chloride, polyurethanes, silicones, polytetrafluoroethylene, neoprene and synthetic rubbers, to produce coated fabrics. These have found wide application in the industrial and commercial, architectural and building industries and for sundry geotextile applications. The performance requirements of the tensile fabric in the polymeric coated textile fabric include: high tensile strength, good flexibility, good weatherability, good chemical resistance, good flexibility in various climates, high tear strength and resistance to tear propagation, good dimensional stability to minimize stretch underload, good stability under various temperature and humidity conditions, good abrasion and good adhesion to the polymeric film coating. These performance requirements are applicable to coated fabrics used in large applications such as air and tension structures like air supported covers over athletic stadiums and airport facilities to smaller applications such as awnings and tarpaulins. For instance, in the air and/or tension structures, the air supported covers can be huge, ranging from 26,000 m2 to an athletic stadium to 425,000 m2 for an airport facility. Two desirable properties in this application and other applications are good flame resistance and dimensional stability. These are two of the excellent properties of glass fibers but the lack of the requisite flexibility, abrasion resistance and adhesion to the polymeric film coating have limited the use of glass fibers in coated textile fabrics.

It is an object of the present invention to provide coated bundles of fibers having a high modulus and low elongation with improved flexibility and abrasion resistance to result in improved woven and nonwoven fabrics, which can be manufactured into numerous woven and nonwoven fabrics taking advantage of the nonflammability and dimensional stability provided by the fibers, and where the fabrics prepared from the bundles need not be heat cleaned to remove various chemical sizing compositions applied to the fibers.

This object is attained by flexible bundle of sized glass fibers having a modulus of elongation of at least 48.265x10$^9$ pascals and an elongation at break of less than 5 percent, the glass fibers having thereon a moisture-reduced residue resulting from an aqueous chemical sizing composition comprising at least a fiber protectorant applied to each of the glass fibers, and the bundle has a partially cured elastomeric coating and imprenant, which is a moisture-reduced residue resulting from an aqueous impregnating composition comprising

i) a water soluble, emulsifiable or dispersible elastomeric polymer and

ii) one or more water soluble, emulsifiable or dispersible crosslinking materials in an effective amount to provide partial curing of the residue, and

iii) water in an effective amount to provide an impregnating coating composition for the bundles of glass fibers which is applied to the bundle of a plurality of glass fibers, characterized in that

the amount of moisture-reduced impregnant on the bundle is greater than 5 percent by weight of the bundle and resulted from the aqueous impregnation composition where the polymer of (i) is selected from the group of silicones, fluororubbers, polysulfide polymers, ethylene-propylene rubber and polyethers and blends of at least two elastomeric polymers that are essentially free of hydrocarbon diene and chlorine functionalities and which have film properties with different modulus of elongation at the same percentage of elongation, where the amount of elastomeric polymer in the solids is greater than any other single component,

and where the crosslinking materials of (ii) are present in the impregnating composition in an amount effective to cure the coating to the extent of 10 percent by weight or less on a dry solids basis through self-crosslinking, crosslinking with the elastomeric polymers, or a mixture thereof.

The invention also includes a process for producing impregnated flexible bundles of sized glass filaments comprising:

a) forming a plurality of glass filaments attenuated from molten glass in orifices in a bushing of a glass batch melting furnace,

b) applying to formed glass fibers filaments an aqueous non-starch-containing sizing composition having a 50/50 blend of a polyalkylene polyol and a polyoxyalkylene polyol, wherein the polyols have an average molecular weight from 300 to 23,000 and wherein the blend is present in an amount of 0.5 to 5 weight percent of the aqueous sizing composition, silane coupling agent in an amount of 0.1 to 2 weight percent of the aqueous sizing composition, a cationic acidified fatty acid amide polyamine lubricant in an amount of 0.01 to 4 weight percent of the aqueous sizing composition, where the total solids of the aqueous sizing composition is in the range of 3 to 20 weight percent,

c) gathering the sized glass filaments into one or more bundles of filaments,

d) collecting the one or more bundles on a winder as a wound package of one or more bundles of sized filaments,

e) drying the packages of bundles of filaments to reduce the moisture on the glass filaments and form a dried residue of the aqueous sizing composition on substantial portions of the surfaces of the filaments in the package, where the moisture reduced residue is present on the glass fibers in the range of 0.1 to 2 percent based on the weight of the sized glass fibers,

f) impregnating the bundle of dried glass filaments with an aqueous impregnating composition having

i) a water soluble, dispersible, or emulsifiable elastomeric polymer,

ii) one or more water soluble, dispersible or emulsifiable crosslinking materials present in an effective amount to provide partial crosslinking for the moisture-reduced residue of the aqueous impregnating, and

iii) water in an effective amount to yield a liquid impregnant composition having a viscosity in the range of up to 20 mPa.s (centipoise) and a total solids in the range of 1 to 25 weight percent.

g) curing the impregnated bundle of sized glass filaments to yield a moisture reduced impregnant present on a substantial portion of the surfaces of the sized filaments as a film,

h) collecting the cured impregnated bundle of sized glass filaments into a wound package,

characterized in that the dried sized glass filaments are removed from the package and subjected to a disturbing force to separate many of the fibers in the bundle one from the other prior to the impregnation of the bundle, and the polymer of (i) is a blend of at least two elastomeric polymers, that are essentially free of hydrocarbon diene and chlorine functionalities and which have film properties with different modulus of elongation at the same percentage of elongation

where the amount of the blend of elastomeric polymers in the solids is greater than any other single Component, the coating is cured to the extent of 10 percent by weight or less on a dry solids basis.

and the curing is yield to a film with a modulus at 100 percent elongation in the range of 1,379 to 55,158 K pascals (200 to 8,000 psi) with a Shore hardness of A 10 to A 100 and with an elongation of 100 to 800 percent.

The fibers can be any fiber having a modulus of elongation of at least $48,265 \cdot 10^9$ pascals and an elongation at break of less than 5 percent and where the fibers are sensitive to interfilament abrasion.

The first chemical treatment is present on a substantial portion of the surfaces of the fibers as a moisture-reduced residue of an aqueous chemical treating composition. The aqueous chemical treating composition, referred to as a sizing composition, has at least a fiber protectorant such as a film forming polymer and/or lubricant, and, if the hydrophilic character of the fibers would limit compatibility with polymers, a hydrophilicity reducing agent such as a coupling agent can be present. The type of protectorant and the absence of interfering components enables the fibers in the form of a bundle to separate one from another when confronted with a disturbing force. The disturbing force can be mechanical contact, gaseous contact, hydrodynamic force or any other frictional contact to disturb the fibers one from the other to allow for fiber separation. The amount of the moisture reduced residue of the sizing composition that is present is generally in the range of 0.05 to 5 weight percent of the treated fiber. The one or more bundles of gathered sized fibers have the moisture-reduced, partially cured impregnating coating resulting from an aqueous impregnating composition. The impregnating coating is curable to the extent of 10 weight percent or less, on a dry solids basis and the crosslinking material is present in the impregnating composition in an amount that is effective to engender curing of the impregnating coating to this extent. The crosslinkable material can effect such a cure through selfcrosslinking, crosslinking with the elastomeric polymer. Furthermore, the aqueous impregnating composition has an effective viscosity for impregnating the bundles of fibers and the amount of moisture-reduced impregnant on the bundles is greater than 5 weight percent of the bundle with the exact amount depending on the filament diameter of the fibers in the bundle. The water in the impregnating coating composition is present in a predominant amount so that the total solids and viscosity of the impregnating coating composition are effective for impregnating the bundle of fibers. The impregnation is to such degree to result in the moisture reduced, partially-cured residue of the aqueous impregnating composition being present as a coating on a substantial portion of a majority of the filaments in the bundle so that a majority of the filaments are separated to some extent from each other by the moisture reduced, partially cured coating.

Optionally, included in the aqueous impregnating composition for the fibers are the following water soluble, dispersible or emulsifiable materials: fiber lubricants, silane coupling agents, diene-containing elastomers, plasticizers, waxes, pigments, dyes, fire retardants and the like. The use of the lubricant is especially useful when the impregnated bundle of fibers is to be braided or woven, and not coated as a fabric with a polymeric coating.

The fibers can be produced by methods well known to those skilled in the art. For example, glass fibers are produced from small orifices in a bushing of a glass batch melting furnace from any fiberizable glass composition, where the filaments are properly treated with an aqueous sizing composition. The aqueous sizing composition is applied to protect the filaments from interfilament abrasion and damage, and, if necessary, render the surface of the glass fibers less hydrophilic to be more compatible with hydrophobic coatings. A plurality of sized glass fibers are gathered into one or more bundles, strands, and collected into a package. One or more bundles of sized glass fibers are removed from one or more packages and treated with the aqueous impregnating composition in such a manner that the sized glass fibers within the bundle separate one from another to a degree to allow the impregnation of the bundle by the aqueous coating composition with the effective viscosity and total solids. The impregnated bundle of glass fibers is dried to partially cure the impregnant to produce impregnated bundles of glass fibers having sufficient flexibility for production of fabrics. The fabric subsequently can be coated to produce coated fabrics by processes such as impregnation or saturation and other surface coating processes like solvent-containing coatings, plastisois and lamination with preformed films or sheets of coating polymeric materials. When the aqueous impregnating composition has a lubricant to provide the bundles of glass fibers with an effective amount of lubricity, the impregnated bundles of glass fibers can be braided into various fabrics.

Brief description of the drawings

Figure 1 depicts the coated fabric showing the laminated sheets or films used in conjunction with the fabric of impregnated bundles of fibers.

Figure 2 is a photograph of a microscopic, enlarged cross-section of the impregnated bundle of treated glass fibers.

Detailed description of the invention

When the high modulus, low elongation fibers are glass fibers, they can be produced from any fiberizable glass batch composition and prepared into glass fibers such as "E-glass fibers, "621glass fibers", "A-glass fibers", "S-glass fibers", "C-glass fibers", and low fluorine and/or boron derivatives thereof. The glass fibers issue forth from orifices in a bushing of the glass batch melting furnace and, when they have cooled sufficiently, the aqueous sizing composition is applied to them. The glass fibers can be mechanically attenuated or prepared by any other method known to those skilled in the art. The aqueous sizing composition can be applied to the glass fibers by any method known to those skilled in the art such as belts, rollers, sprays, and the like. The aqueous sizing composition has present a hydrophilic reducing agent such as a coupling agent to make the fibers less hydrophilic and a protectorant, where the protectorant can be a glass fiber lubricant or a glass fiber film forming polymer. The film forming polymer forms a film upon the evaporation of a carrier, or upon drying or actually forms a liquid film. Also for glass fibers and other types of fibers, additional ingredients like friction-reducing agents and/or antistatic agents may be present. Any coupling agent, glass fiber lubricant or glass fiber film forming polymer known to those skilled in the art can be used. It is preferred that the sized glass fibers do not have present or are essentially free of starch film forming material or any other material that would provide too much cohesion between the fibers. A nonexclusive example of a suitable nonstarch containing aqueous sizing composition for glass fibers is that disclosed in U.S. Patent 4,390,647 (Girgis). The sized glass fibers are gathered into bundles or strands of glass fibers, where the bundles can comprise from 200 to over 3,000 filaments. The bundles of fibers or strands are collected usually by winding onto a forming package or into a precision wound package of roving.

The sized glass fibers usually have 0.05 to 5, preferably 0.1 to 2 weight percent of the sized glass fiber strands as the sizing composition, which has reduced moisture by the evaporation of water either by air drying or by drying at elevated temperatures. Although the sized glass fibers can also be in a wet condition when treated with an aqueous impregnating composition.

In the aqueous sizing composition applied to the glass fibers, the coupling agents employed can be any coupling agent known to those skilled in the art such as silane coupling agents, a few examples of which are γ-aminopropyltrimethoxysilane, methacryloxypropyltrisilane, glycidoxypropyltrimethoxy silane, and the like, and metal halide complex coupling agents like methacrylato chromic chloride complex. Such agents are described in U.S.-A-2,611,718. Other Werner type coupling atents having vinyl, alkyl, amino, epoxy, mercaptyl, thioalkyl, thioaryl, and phenyl groups are also suitable for incorporation into the size. Nonexclusive examples of the various silane coupling agents that can be used in the sizing composition of the instant invention include in general hydrolyzable vinyl, alkyl, beta- chloropropyl, phenyl, thio-alkyl, thio alkyl aryl, aminoalkyl, methacrylato, epoxy and mercapto silanes, their hydrolysis products, polymers of the hydrolysis products and mixtures of any of these may be employed. The usual amounts of coupling agents employed in sizing compositions for glass fibers can be used such as an amount of 0.1 to 2 percent by weight based on the aqueous sizing composition can be used.

The fiber protectorants that can be used in the sizing composition of the present invention include any glass fiber lubricant including wet lubricants and nonionic lubricants or dry lubricants such as cationic lubricants like Cation-X, which is an alkyl imidazoline derivative produced as a reaction product of stearic acid and tetraethylene pentamine stearic acid. Also acid solubilized water, soluble, dispersible stearic amides and anhydrides, acid solubilized water dispersible low molecule weight fatty acid amides, as well as anhydrous acid solubilized and polyunsaturated lower molecular weight fatty acid amides can also be used as the cationic lubricants. Typical hydrogenated vegetable oil lubricants can also be used such as hydrogenated cotton seed oil, hydrogenated corn oil, hydrogenated soybean oil and the like. An example of the film forming polymeric materials that can be used include the polyoxyalkylene polyols or polyalkylene polyols; gelatin; glucose, cellulosic materials such as carboxymethyl cellulose, hydroxyethyl cellulose, methyl cellulose; oxyethylated stearates; and synthetic resins, such as ureaformaldehyde polymers, melamine-formaldehyde polymers, acetoneformaldehyde polymers, phenol-formaldehyde polymers; alkyd resin such as glyceryl-phthalic anhydride reaction products; polyamides, saturated and unsaturated polyesters, hydrocarbon-siloxane resins, epoxy resins; vinyl resins such as homopolymers and copolymers of ethylene, propylene, styrene, isobutylene, butadiene, acrylonitrile, vinyl chloride, vinyl pyrrolidone, vinylidene chloride, vinyl acetate, vinyl alcohol, acrylic acid and ester thereof, methacrylic acid and esters thereof, and the like. Mixtures of these film formers may also be employed. These film-formers are preferably used in the form of aqueous solutions, dispersions or emulsions. Also known silylated versions of the aforementioned film formers can also be used.

The essentially predominant constituent of the solids of the aqueous impregnating coating composition is the aqueous soluble, dispersible or emulsifiable elastomeric polymer that is essentially free of any hydrocarbon diene functionality and essentially free of any chlorine functionality. The meaning of essentially predominant constituent means that most of the solids is comprised of the elastomeric polymer, but the amount can be less than a majority of the solids, such as around 40 weight percent or more. Usually, when the amount is less than around 50 weight percent of the solids, there are more components present. Hence, the total amount of the elastomeric polymer is reduced, but it is still present in an amount of the solids that is greater than any other single component.

The term "elastomer" includes a substance capable of being extended to twice its own length at 68°C and on release of the stress returns with force to approximately its original length all within a reasonable period of time. These materials are noncrystalline in the undeformed state and they have a sufficiently high enough molecular weight to make them elastomeric materials. Also these materials have glass transition temperatures (Tg) of around 0°C or less. The Tg can be determined by any method known to those skilled in the art; for example, nuclear magnetic resonance peak ratio or by less complicated methods involving more approximation like differential thermal analysis. The elastomeric materials can have limited branching, aromatic content and/or polar functionality as long as the Tg of the material is less than around 0°C.

A type of elastomeric polymer that is water soluble, dispersible or emulsifiable that can be employed are the elastomeric, ethylene-containing interpolymers. The interpolymer, which is usually a copolymer or terpolymer, is formed from ethylene monomer and one or more polar comonomers, where the comonomer may vary from co-crystallizing with the polyethylene crystal structure or resulting in an essentially noncrystalline (amorphous) interpolymer. Nonexclusive examples of these polar comonomers include: methyl acrylic acid, ethyl acrylic acid, styrene, alpha methyl styrene, methyl methacrylic acid, acrylamide, methacrylic acid, n-methyl-n-vinyl acetamide, diethyl fumarate, diethyl maleate, n-vinyl pyrrolidone, n-vinyl succinimide and the like and mixtures thereof. The interpolymer has a ratio of the ethylene to the polar comonomers sufficient to have a glass transition temperature (Tg) of around 0°C or less. The interpolymars should be uniform interpolymers rather than nonuniform or alternating copolymers or terpolymers although the latter two types may be used to a limited extent. The uniform interpolymers are those that are formed either from two or more monomers having equal reactivities polymerized to any conversion percent or by limiting the percent conversion during interpolymerization to a low percent conversion when the monomers have different reactivities so that the comonomer concentration is kept almost constant. The nonuniform copolymers and alternating copolymers are those known to those skilled in the art. The interpolymers are also water soluble, emulsifiable or dispersible with the use of suitable emulsifiers and/or solvents. The interpolymers can be produced by any method known to those skilled in the ethylene copolymer art. The amount of the ethylene-containing interpolymer present in the aqueous coating composition is an effective film forming amount for impregnating the bundle of filaments to produce a near continuous film on a substantial portion of the surfaces of the filaments in the bundle of filaments. Also the amount may be effective to form a film on the bundle of filaments. Generally, the amount is a predominant amount of the solids of the aqueous coating composition.

Additional types of aqueous soluble, dispersible or emulsifiable elastomeric polymers that can be employed in the aqueous impregnating coating composition includes: elastomeric silicones such as elastomers formed from polydiorganosiloxanes with hydroxyl and/or alkoxy functionality with the use of internal or external emulsifiers, for instance, an alkylene oxide type internal emulsifier. Also silicones formed from 3,3,3-trifluoropropylmethylsiloxane can be employed. Further examples of elastomers include fluororubbers such as copolymers of vinylidene fluoride and perfluoro propylene, polysulfide polymers, ethylene propylene rubber and polyethers.

In addition to the elastomeric polymer, a crosslinking material is present in the aqueous impregnating coating. The crosslinking material can be selfcrosslinkable and/or crosslinkable with the elastomeric polymer. The crosslinking material is present in an effective amount to provide a degree of crosslinking to reduce any tackiness of the elastomeric polymer in the moisture reduced impregnant residue or to render the elastomeric polymer water insoluble in the moisture reduced, at least partially cured residue of the aqueous impregnating composition. Also when the bundle of filaments is to be coated further as a woven or nonwoven fabric with a film coating of a polymeric matrix, the crosslinking material can provide sufficient crosslinkability for good adhesion or cohesion with the matrix polymer. If the elastomeric polymer can crosslink directly with the polymeric matrix, this amount of crosslinking material would not be necessary. The amount of the crosslinking material present in the aqueous coating composition is that amount to provide effective crosslinking of the moisture reduced residue of the elastomeric polymer provide a film that has a hardness in the range of Shore values from A 10 to D 80 and preferably from A 60 to A 100 and elongation of 100 to 800 percent and most preferably, a modulus at 500 percent elongation of around (500 to 4,000 psi) 3,447 to 27,580 K pascals. 10 weight percent or less and most preferably, up to 6 weight percent on a dry basis of the impregnating coating with the elastomeric polymer is crosslinkable, that is, curable, so that the amount of crosslinking material is sufficient to crosslink with itself or with the elastomeric polymer almost up to that degree of crosslinking. When the bundle of filaments has the finer diameter filaments, the partial curing can be increased from that for larger diameter filaments. Where the impregnated bundles of filaments are packed more densely on a wound package, the bundles will be more tack sensitive and a higher degree of partial curing through crosslinking is desirable. With such a controlled surface tack characteristic, the bundle of filaments impregnated with the aqueous coating composition in a moisture-reduced state can be processed on weaving looms without the use of loom feeders. Although if loom feeders are available, the partial curing can be reduced so that surface tackiness is not controlled as stringently. Preferably, the partial curing results in a hardness or modulus of the moisture-reduced residue of the aqueous coating composition impregnating the bundle of filaments so that the flexibility of the impregnated bundles of filaments has at least a two-fold improvement in flexibility. The improved flexibility is over a similarly constructed, unimpregnated bundle of filaments.

Suitable crosslinking materials include non-polymeric compounds, monomeric and oligomeric materials and polymeric materials. All of these materials are at least selfcrosslinkable at ambient or elevated temperatures and at atmospheric or sub- or super-atmospheric pressures. By selfcrosslinkable, it is meant that the material need not crosslink with the elastomeric polymer. The polymeric material may be selfcrosslinkable through external chemical compounds or through internal crosslinking. By external crosslinkable, it is meant that crosslinking agents known by those skilled in the art for particular resinous polymers can be used to crosslink the polymer. Resinous polymers include such polymers as epoxies, methylol condensate polymers, polyurethanes, polyesters and other polymers that are not rubber polymers as are butadiene, isobutylene, styrenebutadiene-vinyl-pyridine terpolymers and styrene-butadiene copolymers and the like.

A few nonexclusive examples of selfcrosslinkable materials include: aldehyde condensates used in conjunction with acid or basic catalysts, such as melamine formaldehyde, hexakis (methoxymethyl) melamine, phenol formaldehyde and resorcinal formaldehyde include both methylol-containing condensates, monomers, dimers, trimers and higher oligomers. The phenol or resorcinol compounds include cresol and mixtures to its isomers, xyleneol or mixtures, of its isomers, a mixture of homologs of phenol and dihydric phenols such as phlorglucinol, cresorcinol, and meta-xylorcinol. The aldehyde includes any methylene donor that can be used for the formaldehyde such as paraformaldehyde, hexamethylene-tetramine acid aldehyde and furfural and mixtures thereof. The crosslinking material can be an external and/or internal crosslinking or curing agent that are relatively unreactive at room temperature and are reactive for crosslinking at elevated temperatures. Nonexclusive polymeric materials include methylol-containing condensates of phenolic compounds, polyhydroxyphenolic compounds like resorcinol, urea, melamine, and the like, where the methylol results from any methylene donating compound like formaldehyde in its various forms like paraformaldehyde, hexamethylene-tetramine, acid aldehyde and furfural and mixtures thereof, and also includes aminoplastic resins, organic polyisocyanates, and epoxy-containing polymers. Further examples of suitable external and internal crosslinking materials are given in US-A-4,066,591 (Scriven et al.). It is preferred to have one or more melamine formaldehyde resins because of their ease in crosslinking and their compatibility with the polyurethane polymers.

A particularly suitable melamine formaldehyde resin is the aqueous melamine formaldehyde resin available from Monsanto Company under the trade designation Resimene 841 which has less than 2 percent free formaldehyde and less than 5 percent methanol and has a boiling point of 99°C (210°F). The Resimene® 841 also has a vapor pressure of 95 for methanol and 17.5 for water, a vapor density of 1.11 for methanol and .64 for water and has a colorless, clear mobile liquid appearance and has a specific gravity at (77°F) 25°C of 1.25 and a percent volatile by volume percent of 29. Such a crosslinkable material as the melamine formaldehyde resin may require the use of a crosslinking controlling agent to control the degree of crosslinking between the crosslinkable polymer material. The crosslinking controlling agent can be one which modifies the pH of the coating composition such as ammonium hydroxide or an acid catalyst for the crosslinkable material. A nonexclusive example of the latter is a solution of toluene sulfonic acid in isopropanol such as that available under the trade designation Cycat 4040 with 40 percent acid and 60 percent alcohol available from American Cyanamide Co. Another particularly suitable material is that available from Witco Chemical Corporation under the trade designation Witcobond XW aqueous epoxy emulsion. This epoxy emulsion has an epoxide equivalent weight of 345 to 385, a percent nonvolatiles of 54 to 56 percent, a viscosity in Brookfield at 25°C (77°F), 1.5 to 7.0 Pa.s, poise of 15 to 70) and an appearance which is a milky white liquid, and has a flashpoint of greater than (200°F) 93°C, has (pounds per gallons at 25°C of 9.1) 1.09 $g/cm^3$ at 25°C.

When the elastomeric polymer is a silicon, the crosslinking material can be an acetoxy, ketoxime or alkoxy functional compound or other curing agents for silicon known to those skilled in the art.

The water in the aqueous chemical treating composition constitutes a predominant amount of the composition including both volatile and nonvolatile portions. The amount of water results in a total solids concentration and viscosity for the composition that enables the composition to impregnate the bundle of filaments including bundles of strands and yarn. The degree of impregnation of the bundle of filaments is such that a majority of the filaments have a substantial portion of their surfaces covered with a near continuous film of the residue of the aqueous coating composition so that a majority of the filaments are separated from each other. It is not necessary that the bundle is encapsulated, although it may be as long as it is also impregnated. The aqueous coating composition has a solids content of around 50 percent or less, the viscosity of the aqueous coating composition is around 5 or less for a kiss roll type coating application and up to around 15±5 mPa · s (centipoise) at room temperature for a die coating process. The total solids of the aqueous coating composition varies depending upon the diameter of the filaments in the bundle. The variation is that the finer diameter filaments require a higher total solids in the aqueous chemical treating composition, since the surface area of the finer diameter filaments is higher.

In addition to the aqueous dispersible, emulsifiable or soluble elastomeric polymer and crosslinking material present in the aqueous coating composition along with water, there may also be present a number of optional components. The type of optional component present depends upon the final end use of the coated bundle of fibers. For instance, when the coated bundle is to be braided and woven for producing electrical harnesses to contain electrical wires, a lubricant should be present in the aqueous coating composition. Any glass fiber lubricant known to those skilled in the art can be incorporated into the aqueous coating composition. A particularly suitable lubricant is a silylated lubricant available from Union Carbide Corporation under the trade designation Y-9662. This material as described in the Product Safety Data Sheet is an organosilane ester with a boiling point of greater than 150°C at 1013 mbar (760 mm Hg) and with a specific gravity of 1.05 at 25/25°C, and with a vapor density of greater than one, and with a vapor pressure at 20°C of less than 1.33 mbar (1 mm Hg) and with less than 1 percent volatiles by volume, and with an evaporation rate of less than 1 with butyl acetate equal to one and with an appearance of a clear to slightly hazy colored liquid and with a characteristic odor.

Another additional ingredient that can be present in the aqueous coating composition is one or more silane coupling agents and any of the aforelisted silane coupling agents used in the aqueous sizing composition can be used in the aqueous coating composition.

Also, one or more aqueous dispersible, emulsifiable or soluble plasticizers can be included in the aqueous coating composition. The aqueous dispersible or emulsifiable plasticizers would be used with suitable nonionic, cationic, anionic, amphoteric or zwitterionic emulsifiers or dispersing agents having HLB values which are in the same range as the HLB value of plasticizer. Suitable examples of plasticizers that can be used include butyl benzyl phthalate available under the trade designation Sanitizer 160, wherein a suitable emulsifier is polyoxyethylene sorbitan monolaurate available from ICI America, Inc. under the trade designation Tween® 21 emulsifier. Another example of a suitable plasticizer is tri-xylyl phosphate available under the trade designation Phosflex 179-A® available from Stauffer Chemical Company. This material is a liquid with a specific gravity at 20-°C./20-°C. of 1.143, a density of 1.015 kg/l (lb per gallon of 9.5), a boiling point in degrees C. at 13.33 mbar (10 millimeters Hg) of 265-285°C, a pour point of (0°F) -17.7°C, a viscosity at (100°F) 37.7°C SUS of 220 and a flashpoint of (455°F) 235°C.

Another suitable plasticizer is Benzoflex® dibenzoate esters of dipropylene glycol or any of several polyethylene glycols available from Velsicol Chemical Corporation. Another optional component that may be present in the coating composition is a flame retardant, where any flame retardant that is water soluble, emulsifiable or dispersible can be used. A suitable flame retardant is antimony trioxide which can be emulsified with the Tween 21 emulsifier in water.

In addition, an optional component of the aqueous chemical coating composition can be one or more aqueous emulsifiable or dispersible waxes. The type and amount of wax is that which is effective to serve as an adhesion promoter for the matrix coating that will be applied to fabrics made from the flexible bundle of filaments. In addition, the type and amount of wax can be effective to provide a screen effect against ultraviolet degradation when the fabric or polymer coated fabric is not protected from the weather or the environment. Also the wax may modify the frictional properties of the impregnated bundles of filaments. The one or more waxes can be dispersed or emulsified in water with any suitable emulsifiers known to those skilled in the art. The one or more waxes can be included in the aqueous coating composition in a preemulsified or predispersed form. The preferred wax materials are the microcrystalline wax materials and suitable examples of commercially available predispersed forms include Polymekon® SPPW-40 microcrystalline wax available from Petrolite Corporation-Bareco Division, Tulsa, Oklahoma. This material is a hydrocarbon water dispersion with a 40 percent solids. Another suitable example of Mobilcer® Q microcrystalline wax available from Mobil Chemical Company. This material is an acid type aqueous emulsion of microcrystalline wax, where the wax has a melting point of (160°F) 71.1°C, and where the emulsion has an average particle size of 2 μm and a solids content of 50.5 percent by weight, and an emulsion density of 7.9 and a pH of 6.8. Preferably, the amount of wax present in the coating composition is in the range of up to about 5 weight percent of the aqueous coating composition. Any suitable solids and dispersants or emulsifiers having a suitable HLB value as known to those skilled in the art can be used to assist in emulsifying or dispersing the wax in water.

The aqueous coating composition having present the elastomeric polymer and crosslinking material and water need not having present all of the optional ingredients such as the wax, plasticizer, and the like except in regard to the presence of certain polar comonomers in the ethylene-containing interpolymer as aforementioned.

Another suitable flame retardant, is an aqueous dispersion of a brominated epoxy polymer. A suitable example is the brominated epoxy resin dispersion available from Celanese Corporation under the trade designation RDX-49630. This material is a 60 percent dispersion of a brominated epoxy resin in water, where the epoxy resin contains approximately 20 percent by weight bromine without any organic solvents being present. The viscosity of this material at 25°C. is 10,000 mPa · s (centipoise) with a weight per gallon of 10.1 and a weight per epoxide of 450 and a pH of 7.2. When this epoxy resin is used in the aqueous coating composition, it can be cured with curing agents such as dicyandiamide, various substituted imidazoles and aliphatic means. A suitable curing agent is that available from Celanese Corporation under the trade designation Epicure 8525 polyamine curing agent. This latter material has a viscosity of 800 mPa · s (centipoise) at 75°C. and an equivalent weight on solids of 127 and 0.866 kg/l (pounds per gallon of 8.1).

The aqueous coating composition can be prepared by adding all of the components sequentially or simultaneously to the desired volume of water with appropriate emulsifiers for any of the material to be emulsified or dispersed in water. Preferably, the materials that are not water soluble are preemulsified or dispersed with suitable solvents and emulsifiers with appropriate HLB values as known to those skilled in the art and then added to formulate the aqueous coating composition. The crosslinking material which is in a diluted aqueous medium is added to the elastomeric polymer dispersion or mixture of elastomeric polymer and any plasticizers, lubricants and/or fire retardants. The aqueous coating can be further diluted with water to achieve a desired volume of.material to give the aqueous coating composition the total solids and viscosity required for impregnating the bundles of filaments.

The aqueous impregnating composition is applied to the bundles of filaments which includes strands, bundles of strands, ,yarns twisted and untwisted and merely bundles of monofilaments. The application can be by dip coating or die coating or any other process known to those skilled in the art for applying coatings to groups of filaments. For example, the bundle of filaments can be dipped into a bath containing the aqueous impregnating composition or the bundle can contact a kiss roll or other applicator device that carries it to contact the bundle of filaments. Also a die coating arrangement can be employed, where the bundle of filaments is pulled, pushed or stuffed through permanent or adjustable orifices. This operates effectively to open the strand immediately in advance of the orifice to expose the innermost regions of the glass fiber bundle to the liquid impregnant located in the container with the orifices. Before the bundle contacts the impregnant, it can ride over a bar or similar device under tension to spread the fibers in the bundle for maximum separation and better impregnation. The sized filaments have the sizing composition which does not provide too much integrity between the filaments when they are gathered into groups or bundles of filaments so that upon the application of a disruptive force, before or during dip or die coating, the filaments separate somewhat one from the other to assist in allowing the coating composition to surround and enter the groups or bundles of filaments. Hence, the sizing assists in producing an impregnation preferably to a degree so that every filament in the bundle or in bundled strands has a substantial portion of its surface covered with the aqueous coating composition so that when the aqueous coating composition is dried and partially cured, the filaments in the bundles will be separated from each other.

The bundles of filaments with the treatment of the aqueous coating composition and dried to partially cure and reduce the moisture content of the aqueous coating composition. Any method known to those skilled in the art for curing crosslinkable materials may be used to dry and cure the coated and impregnated bundle of filaments. It is preferred that the drying is a non-dielectric type drying and that the moisture is reduced to a moisture content in the range of less than around 1 to about 2 percent of the bundles. This and partial curing are accomplished by drying at suitable temperatures and times to result in the desired moisture reduction and partial cure. Preferably, the drying is conducted at a temperature in the range of about (400°F to about 500°F) 200-260°C for a time in the range of 10 seconds to 60 seconds or any equivalent temperature and time relationship to accomplish a similar degree of moisture reduction and partial cure.

The partially cured coated bundle of filaments is flexible enough to undergo myriad fabric producing processes. Nonexclusive examples of fabric producing processes include weaving, nonwoven fabrics, knitted, braided, weft-knit fabrics such as those produced on the Maye® or Libya®weft insertion fabric machine. On this type of machine, the fabric is a bidirectional crosslaid warp and weft structure, where the weft yarns do not interlace as in traditional woven fabrics. A "knit stitch" is run in the warp machine direction to lock the fabric together. For the weaving operation, plain weave, satin weave or any other type of weaving for producing a fabric as known to those skilled in the art can be used.

The fabric whether woven or nonwoven or knitted or braided can be coated with numerous types of coatings by myriad processes or remain uncoated. Examples of suitable polymeric coatings include vinyl resins such as polyvinyl chloride, polyethylene and ethylene copolymers, polyurethanes, phenolic resins, melamine formaldehyde resins and elastomeric materials such as chlorosulfonated polyethylene, chlorinated polyethylene, and polymers of ethylene propylene diene monomers, and Hypalon® elastomers and silicone polymers.

These types of polymers can be coated onto fabrics of the flexible bundle of filaments by impregnation or saturation processes and surface coating processes such as solvent-containing coatings and 100 percent solids coatings and lamination processes of preformed films or sheets. For example, when a plastisol, 100 percent solids coating, is used, an application of a first coating of poly(vinylchloride) latex is applied to the fabric to improve adhesion of subsequent plastisol coatings. After the application of the plastisol coating paste to the fabric, the fabric is heated to a temperature usually around (350 to 400°F) 177-205°C to permit the resin particles to form a continuous phase over the fabric and to actually contact in the interstices between the fabric. The polymeric coating then cools to a tough coherent film at room temperature. The fusion process is so quick that the coated fabrics may be cooled as soon as the required fusion temperature is obtained. In addition to the polymeric material, various pigments or fillers can be included and the polymeric materials may be modified by plasticizers and solvents.

The polymeric coating and preferably the polyvinyl chloride coating also can be applied by any impregnation process known to those skilled in the art such as passing the fabric over a knife-over-roll coater. Also any wet coating process known to those skilled in the art can be used such as passing the fabric over sequential knife coaters or through a floating knife coater with a support channel. Also blanket knife coaters and inverted knife coaters and levelon coaters with reverse smoothing rolls can be used as can engraved-roll or rotogravure coating units. In applying the plastisois, any dry or 100 percent solids coatings process known to those skilled in the art can be used. For instance, hot melt coating can be used or any modified wet coating process, where there is not any solvent evaporation. In addition, cast-coating techniques can be used as well as metal-belt precast coaters. Also a dry powder resin coating method such as hot calendar-coating and extrusion-coating can be used. Also wet lamination and dry lamination involving the union of the fabric with a film or sheet of the polymer, which has been formed in a separate operation, can be used. In the lamination processes, the film or sheet can be formed by calendaring, by extrusion, or by casting in a separate operation and laminated to the fabric base. With these processes an adhesive coating can be applied to the plastic sheet prior to the application of pressure against the fabric and plastic sheet or the plastic sheet can act as the thermoplastic adhesive itself and it can be heated to produce the adhesion and, afterwards, brought into contact with the fabric while hot. The use of adhesive application is performed in the multipleply drum lamination process. Also with foamable polymeric materials, the thermoplastic foam lamination process can be used.

In addition to the woven or knitted fabrics or nonwoven scrim end use applications, numerous specialty products can be produced from the impregnated bundles of fibers of the present invention. Such specialty products includes ropes and cordage, dryer felts, conveyor belts, reinforcement mesh for concrete and gypsum, webbing and strapping, slings, electrical sleeving and harnesses and reinforced tapes, cables for aerial dropwires, mattress ticking and fiber optic cables. In most of these specialty products area, the aqueous coating composition would have a lubricant present and preferably a silylated lubricant for facile braiding and weaving of the resultant coated bundle of glass fibers. Also the impregnated bundles of filaments are readily receptive to both aqueous and nonaqueous dying processes.

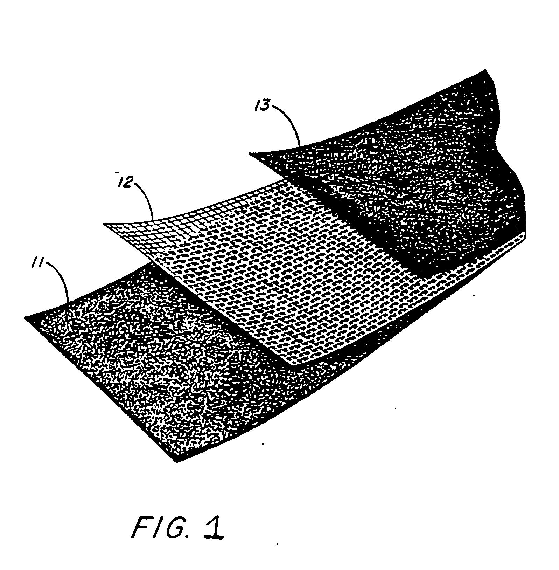

Figure 1 depicts a coated fabric of the present invention, where numeral 12 shows the fabric comprised of the flexible impregnated bundle of glass fibers of the present invention and numerals 11 and 13 indicate the polyvinyl chloride sheets or films that are laminated together sandwiching the fabric in between the laminate sheets. Ordinarily, the thickness of the coated fabric ranges from even less than (0.01 to greater than 0.06 inch) 0.025 cm-0.15 cm, and the amount of coating on a unit area of the fabric varies widely, but it is usually around (5 to about 50 ounce/yd$^2$) 119-1700 g/m$^2$.

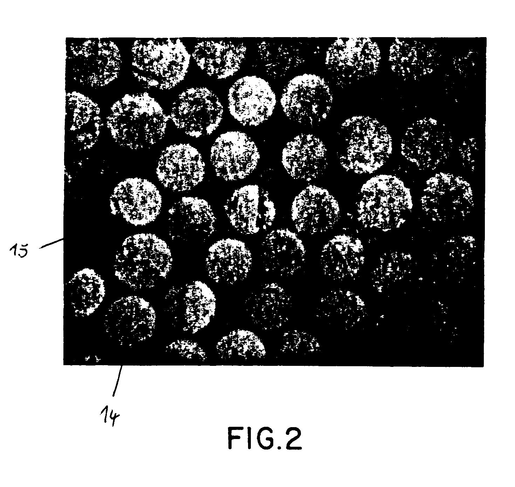

Figure 2 is a photograph depicting a crosssectional view of the coated bundle of glass fibers of the present invention. The cross-section is magnified 600 times on a conventional microscope. The specimen was prepared by making a 0.254 $\mu$m (.01 mil) cross-sectional cut with a microtone cutter of the pigmented impregnated bundle of glass filaments of the present invention. The specimen was embedded in epoxy resin. Numeral 14 shows the glass filaments with the residue of the sizing composition and numeral 15 depicts the partially cured, moisture reduced coating impregnating the bundle of sized glass fibers. As noted from Figure 2, the majority of glass filaments are not actually touching each other with a glass surface to a glass surface, but are separated from one another by the partially cured, moisture reduced coating.

Preferred embodiment of the invention

In the preferred embodiment of the present invention, the filaments of glass fibers are usually of the "E-glass" or "621-glass" variety. The glass fibers are formed by attenuation from molten streams of glass issuing forth from orifices in a bushing of a glass batch melting furnace. After the filaments have cooled below the boiling point of water, an aqueous sizing composition is applied to the fibers. The aqueous sizing composition is a nonstarch textile size having a 50/50 blend of polyalkylene polyol having an average molecular weight of 300 to 12,000 available under the trade designation Pluracol® V-7 polyol and polyoxyalkylene polyol available under the trade designation Pluracol® V-10 polyol from BASF Wyandotte. The amount of the blend is in the range of 0.5 to 5 weight percent of the aqueous sizing composition and most preferably, 1 to 3 weight percent. A silane coupling agent is preferably a lubricant modified amino silane coupling agent available under the trade designation Y-9072 silane from Union Carbide Corporation. This material is gamma-aminopropyltriethoxysilane and is present in an amount in the range of 0.01 to 2 weight percent of the aqueous sizing composition. The preferred cationic lubricant that is present in the aqueous size is a polyamine lubricant commercially available as an acidified cationic fatty acid amide under the trade designation Emery® 6760-U. This material is present in the aqueous sizing composition in an amount of 0.1 to 4 weight percent of the aqueous treating composition. Total solids of the aqueous sizing composition can be a convenient solids range for sizing compositions to be applied at a proper and desired LOI (Loss on ignition) to glass fibers. Preferably the total solids is in the range of 3 to 20 weight percent. It is preferred to apply the aqueous sizing composition to the glass fibers in such a manner to give an LOI (loss of ignition) for the glass fibers in the range of 0.1 to 1 percent and most preferably 0.5 to 0.8 percent.

The exact components of the aqueous impregnating composition to be applied to the glass fibers treated with the aqueous nonstarch sizing composition depends upon the end use of the coated glass fibers, but the impregnating composition preferably is a one phase polymeric system.

In alternative embodiments, the K-15 3/0 strand construction need not be the only strand construction used for the coated bundle of glass fibers. For instance, K-15, 1/0, 2/0, 3/0, 4/0 and K-37 and H-251/0 and G-371/0 and G-751/0 and G-1501/0 and D-2251/0 and D-4501/0 and M-450 are just a few examples of other types of strand constructions that can be used.

The present invention enables the production of bundles of filaments like glass fibers, where the advantageous properties are maintained, where such properties include: high tensile strength, high tear strength, resistance, dimensional stability like high modulus to minimize stretch under load and yarn stability unaffected by temperature and humidity changes, resistance to chemical attack, resistance to UV degradation and flammability resistance. In addition, improvements are obtained in the properties of flexural strength and abrasion resistance.

**Claims**

1. A flexible bundle of sized glass fibers having a modulus of elongation of at least 48.265 x $10^9$ pascals and an elongation at break of less that 5 percent, the glass fibers having thereon a moisture-reduced residue resulting from an aqueous chemical sizing comyosition comprising at least a fiber protectorant applied to each of the glass fibers, and the bundle has a partially cured elastomeric coating and impregnant, which is a moisture-reduced residue resuling from an aqueous impregnating composition comprising

    i) a water soluble, emulsifiable or dispersible elastomeric polymer and

    ii) one or more water soluble, emulsifiable or dispersible crosslinking materials in an effective amount to provide partial curing of the residue, and

    iii) water in an effective amount to provide an impregnating coating composition for the bundles of glass fibers glass

    which is applied to the bundle of a plurality of fibers,

    **characterized in that**,

    the amount of moisture-reduced impregnant on the bundle is greater than 5 percent by weight of the bundle and resulted from the aqueous impregnation composition where the polymer of (i) is selected from the group of silicones, flurorubbers, polysulfide polymers, ethylene-propylene rubber and polyethers and blends of at least two elastomeric polymers that are essentially free of hydrocarbon diene and chlorine functionalities and which have film properties with different modulus of elongation at the same percentage of elongation, where the amount of the elastomeric polymer in the solids is greater than any other single component and where the crosslinking materials of (ii) are present in time impregnating composition in an amount effective to cure the coating to the extent of 10 percent by weight or less on a dry solids basis through self-crosslinking, crosslinking with the elastomeric polymers, or a mixture thereof.

2. Flexible bundle of glass fibers according to claim 1,
characterized in that
the aqueous impregnating composition includes one or.more water soluble, emulsifiable or dispersible plasticizers,

3. Flexible bundle of glass fibers according to claims 1 to 2,
characterized in that
the aqueous impregnating composition includes on or more silane coupling agents.

4. Flexible bundle of glass fibers according to claims 1 to 3,
characterized in that
the moisture reduced, partially cured residue of the impregnating composition also encapsulates the bundle of fibers.

5. Flexible bundle of glass fibers according to claims 1 to 4,
characterized in that,
the aqueous impregnating composition has the crosslinking material which is selfcrosslinkable in an effective amount to provide for partial curing of the residue to result in a residue having a modulus at 100 percent elongation of a cast film of the aqueous impregnating coating composition in the range of 1,379 to 55,158 Kpascals (200 to 6,000 psi), with a shore hardness of Shore A 60 to Shore A 100 and with an elongation of 100 to 800 percent.

6. Flexible bundle of glass fibers according to claims 1 to 4,
characterized in that
the residue of the impregnating composition has a hardness in the range of Shore A 10 to Shore D 80 and a modulus at 500 percent elongation of 3,447 to 27,580 kpascals (500 to 4,000 psi).

7. Flexible bundle of glass fibers according to claims 1 to 6,
characterizing in that
the crosslinking material is one or more methylene donor condensate resin is selected from the group consisting of resorcinol formaldehyde resins, phenol formaldehyde resins, melamine formaldehyde resins and mixtures thereof.

8. Flexible bundle of glass fibers according to claims 1 to 6,
characterized in that

when the elastomeric polymer is a silicone polymer, the crosslinking material is selected from the group consisting of acetoxy, ketoxime or alkoxy functional compounds.

9. Flexible bundle of glass fiber of claims 1 to 8,
characterized in that
the aqueous coating and impregnating composition has one or more aqueous emulsifiable or dispersible microcrystalline waxes.

10. Flexible bundle of glass fibers of claims 1 to 9,
characterized in that,
in the aqueous coating and impregnating composition the effective amount of water provides an impregnant to impregnate the bundle having a viscosity in the range of up to 20 mPa.s (20 centipoise) and a total solids in the range of 1 to 25 weight percent.

11. Flexible bundle of fibers according to claims 1 to 11,
characterized in that,
the glass fibers are sized with an aqueous sizing composition which is a non-starch-containing composition having 0.5 to 5 weight percent of one or more water dispersible, high molecular weight polyols selected from the group consisting of polyoxyalkylene polyols and polyalkylene polyols having an average molecular weight of 300 to 12,000 and mixtures thereof present as flexible film formers, and 0.1 to 2 weight percent of one or more silane coupling agents, and 0.1 to 4 wight percent of a cationic lubricant, and water in an amount to give a total solids content for the aqueous composition in the range of 3 to 20 weight percent.

12. Flexible bundle of fibers according to claim 12,
characterized in that,
in the aqueous chemical sizing composition there is present an antistatic agent.

13. A process for producing impregnated flexible bundles of sized glass filaments comprising:
a) forming a plurality of glass filaments attenuated from molten glass in orifices in a bushing of a glass batch melting furnace,
b) applying to formed glass fiber filaments an aqueous non-starch-containing sizing composition having a 50/50 blend of a polyalkylene polyol and a polyoxyalkylene polyol, wherein the polyols have an average molecular wight from 300 to 23,000 and wherein the blend is present in an amount of 0.5 to 5 weight percent of the aqueous sizing composition, silane coupling agent in an amount of 0.1 to 2 weight percent of the aqueous sizing composition, a cationic acidified fatty acid amide polyamine lubricant in an amount of 0.01 to 4 weight percent of the aqueous sizing composition, where the total solids of the aqueous sizing composition is in the range of 3 to 20 weight percent,

c) gathering the sized glass filaments into one or more bundles of filaments,

d) collecting the one or more bundles on a winder as a wound package of one or more bundles of sized filaments,

e) drying the packages of bundles of filaments to reduce the moisture on the glass filaments and form a dried residue of the aqueous sizing composition on substantial portions of the surfaces of the filaments in the package, where the moisture reduced residue is present on the glass fibers in the range of 0.1 to 2 percent based on the weight of the sized glass fibers,

f) impregnating the bundle of dried glass filaments with an aqueous impregnating composition having

 i) a water soluble, dispersible, or emulsifiable elastomeric polymer,

 ii) one or more water soluble, dispersible or emulsifiable crosslinking materials present in an effective amount to provide partial crosslinking for the moisture-reduced residue of the aqueous impregnating, and

 iii) water in an effective amount to yield a liquid impregnant composition having a viscosity in the range of up to 20 mPa.s (centipoise) and a total solids in the range of 1 to 25 weight percent,

g) curing the impregnated bundle of sized glass filaments to yield a moisture reduced impregnant present on a substantial portion of the surfaces of the sized filaments as a film,

h) collecting the cured impregnated bundle of sized glass filaments into a wound package, **characterized in that,** the dried sized glass filaments are removed from the package and subjected to a disturbing force to separate many of the fibers in the bundle one from the other prior to the impregnation of, the bundle, and the polymer of (i) is a blend of at least two elastomeric polymers, that are essentially free of hydrocarbon diene and chlorine functionalities and which have film properties with different modulus of elongation at the same percentage of elongation where the amount of the blend of elastomeric polymers in the solids is greater than any other single component, the coating is cured to the extent of 10 percent by weight or less on a dry solids basis and the curing yields to a film with a modulus at 100 percent elongation in the range of 1379 to 55,158 K pascals (200 to 8,000 psi) with a Shore hardness of A10 to A 100 and with an elongation of 100 to 800 percent.

14. Use of the flexible bundle of glass fibers according to claims 1 to 14 to produce polymeric coated fabric constructed from the bundles of filaments.

**Patentansprüche**

1. Flexibles Bündel geschlichteter Glasfasern mit einem Dehnungsmodul von mindestens 48,265 x $10^9$ Pascal und einer Reißdehnung von weniger als 5%, wobei die Glasfasern einen Rückstand mit verringerter Feuchtigkeit einer auf jede Glasfaser aufgebrachten wäßrigen chemischen Schlichtzusammensetzung, die mindestens ein Faserschutzmittel enthält, aufweisen und das Bündel eine teilweise gehärtete elastomere Beschichtung und Imprägnierung aufweist, die ein Rückstand mit verringerter Feuchtigkeit einer auf das Bündel aus einer Vielzahl von Glasfasern aufgebrachten wäßrigen Imprägnierzusammensetzung ist, die enthält

 i) ein in Wasser lösliches, emulgierbares oder dispergierbares elastomeres Polymer und ii) ein oder mehrere in Wasser lösliche, emulgierbare oder dispergierbare Vernetzungsmittel in einer zum teilweisen Härten des Rückstandes ausreichenden Menge und iii) Wasser in einer zum Schaffen einer imprägnierenden Beschichtungszusammensetzung für die Glasfaserbündel wirksamen Menge,

**dadurch gekennzeichnet,** daß die Menge des Rückstandes mit verringerter Feuchtigkeit der Imprägnierung auf dem Bündel größer als 5 Gew.-% des Bündels ist und von einer wäßrigen Imprägnierzusammensetzung herrührt, in der das Polymer (i) ausgewählt ist aus der Gruppe von Siliconen, Fluorkautschuk, Polysulfidpolymeren, Ethylen-Propylenkautschuk und Polyethern und Mischungen von mindestens zwei elastomeren Polymeren, die im wesentlichen frei von Kohlenwasserstoffdien- und Chlorfunktionalität sind und die Filmeigenschaften aufweisen mit unterschiedlichen Dehnungsmodulen bei gleicher prozentualer Dehnung, wobei die Menge des elastomeren Polymeren in den Feststoffen größer ist als jeder andere einzelne Bestandteil und wobei die Vernetzungsmittel (ii) in der Imprägnierzusammensetzung in einer zum Härten der Beschichtung bis zu einem Ausmaß von 10 Gew.-% oder weniger, bezogen auf Trockensubstanz, durch Selbstvernetzung, Vernetzen mit den elastomeren Polymeren oder einer Mischung derselben, vorhanden sind.

2. Flexibles Glasfaserbündel nach Anspruch 1, **dadurch gekennzeichnet,**

daß die wäßrige Imprägnierzusammensetzung einen oder mehrere in Wasser lösliche, emulgierbare oder dispergierbare Weichmacher enthält.

3. Flexibles Glasfaserbündel nach Anprüchen 1-2, **dadurch gekennzeichnet,** daß die wäßrige Imprägnierzusammensetzung ein oder mehrere Silankupplungsmittel enthält.

4. Flexibles Glasfaserbündel nach Ansprüchen 1-3, **dadurch gekennzeichnet,** daß der teilweise gehärtete Rückstand der Imprägnierzusammensetzung mit verringerter Feuchtigkeit das Faserbündel auch einkapselt.

5. Flexibles Glasfaserbündel nach Ansprüchen 1-4, **dadurch gekennzeichnet,** daß die wäßige Imrpägnierzusammensetzung das sich selbst vernetzende Vernetzungsmittel enthält in einer wirksamen Menge, um teilweises Härten des Rückstandes zu bewirken, so daß ein Rückstand entsteht, der bei 100% Dehnung eines aus der wäßrigen Imprägnierzusammensetzung gegossenen Filmes einen Modul im Bereich von 1.379-55.158 kPascal (200-8.000 psi), eine Shore A Härte von 60-100 und eine Dehnung von 100-800% aufweist.

6. Flexibles Glasfaserbündel nach Ansprüchen 1-4, **dadurch gekennzeichnet,** daß der Rückstand der Imprägnierzusammensetzung eine Härte nach Shore A10 bis Shore D80 und bei 500% Dehnung einen Modul von 3.447-27.580 kPascal (500-4.000 psi) aufweist.

7. Flexibles Glasfaserbündel nach Ansprüchen 1-6, **dadurch gekennzeichnet,** daß das Vernetzungsmittel ein oder mehrere Methylendonorkondensatharz(e) ist(sind), ausgewählt aus der Gruppe bestehend aus Resorcin-Formaldehydharzen, Phenol-Formaldehydharzen, Melamin-Formaldehydharzen oder Mischungen derselben.

8. Flexibles Glasfaserbündel nach Ansprüchen 1-6, **dadurch gekennzeichnet,** daß dann, wenn das elastomere Polymer ein Siliconpolymer ist, das Vernetzungsmittel aus der Gruppe ausgewählt ist, bestehend aus acetoxy-, ketoxin- oder alkoxyfunktionellen Verbindungen.

9. Flexibles Glasfaserbündel nach Ansprüchen 1-8, **dadurch gekennzeichnet,** daß die wäßrige Beschichtungs- und Imprägnierzusammensetzung ein oder mehrere wäßrige, emulgierbare oder dispergierbare mikrokristalline Wachse enthält.

10. Flexibles Glasfaserbündel nach Ansprüchen 1-9, **dadurch gekennzeichnet,** daß in der wäßrigen Beschichtungs- und Imprägnierzusammensetzung die wirksame Wassermenge ein Imprägniermittel zum Imprägnieren des Bündels mit einer Viskosität im Bereich bis zu 20 mPa.s (20 cpse) und einem Gesamtfeststoffgehalt im Bereich von 1-25 Gew.-% ergibt.

11. Flexibles Faserbündel nach Ansprüchen 1-10, **dadurch gekennzeichnet,** daß die Glasfasern mit einer wäßrigen Schlichtzusammensetzung geschlichtet sind, die eine keine Stärke enthaltende Zusammensetzung ist, enthaltend 0,5-5 Gew.-% eines oder mehrerer in Wasser dispergierbarer Polyole mit hohem Molekulargewicht, ausgewählt aus der Gruppe bestehend aus Polyoxyalkylenpolyolen und Polyalkylenpolyolen mit einem mittleren Molekulargewicht von 300-12.000 und Mischungen derselben, die als flexible Filmbildner anwesend sind, und 0,1-2 Gew.-% eines oder mehrerer Silankupplungsmittel und 0,1-4 Gew.-% kationische Gleitmittel und Wasser in einer Menge, die der wäßrigen Zusammensetzung einen Gesamtfeststoffgehalt im Bereich von 3-20 Gew.-% verleiht.

12. Flexibles Faserbündel nach Anspruch 11, **dadurch gekennzeichnet,** daß in der wäßrigen chemischen Schlichtzusammensetzung ein Antistatikum vorhanden ist.

13. Verfahren zum Herstellen imprägnierter, flexibler Bündel geschlichteter Endlosglasfasern durch
    a) Ausbilden einer Vielzahl von Endlosglasfasern durch Ausziehen von geschmolzenem Glas durch Öffnungen in Düsen eines Glasgemengeschmelzofens,
    b) Aufbringen einer wäßrigen, keine Stärke enthaltenden Schlichtzusammensetzung auf die gebildeten Endlosglasfasern, die enthält eine 50/50 Mischung eines Polyalkylenpolyols und eines Polyoxyalkylenpolyols, wobei die Polyole ein mittleres Molekulargewicht von 300-23.000 aufweisen und die Mischung in einer Menge von 0,5-5 Gew.-% der wäßrigen Schlichtzusammensetzung vorhanden ist, Silankupplungsmittel in einer Menge von 0,1-2 Gew.-% der wäßrigen Schlichtzusammensetzung, ein kationisches Gleitmittel auf Basis angesäuerten Fettsäureamidpolyamins in einer Menge von 0,01-4 Gew.-% der wäßrigen Schlichtzusammensetzung, wobei der Gesamtfeststoffgehalt der wäßrigen Schlichtzusammensetzung im Bereich von 3-20 Gew.-% liegt,
    c) Vereinigen der geschlichteten Endlosglasfasern zu einem oder mehreren Bündeln von Fasern,

d) Sammeln des einen oder der mehreren Bündel auf einer Wickelvorrichtung als aufgewickelte Spule aus einem oder mehreren Bündeln geschlichteter Endlosfasern,

e) Trocknen der Spulen von Bündeln Endlosfasern, um die Feuchtigkeit auf den Endlosglasfasern zu verringern, und Ausbilden eines getrockneten Rückstandes der wäßrigen Schlichtzusammensetzung auf wesentlichen Teilen der Oberflächen der Endlosfasern in der Spule, wobei der Rückstand mit verringerter Feuchtigkeit auf den Glasfasern in einer Menge im Bereich von 0,1-2 Gew.-%, bezogen auf das Gewicht der geschlichteten Glasfasern, vorhanden ist,

f) Imprägnieren der Bündel getrockneter Endlosglasfasern mit einer wäßrigen Imprägnierzusammensetzung, enthaltend

i) ein in Wasser lösliches, dispergierbares oder emulgierbares elastomeres Polymer, ii) ein oder mehrere in Wasser lösliche, dispergierbare oder emulgierbare Vernetzungsmittel in einer zum teilweisen Vernetzen des Rückstandes mit verringerter Feuchtigkeit der wäßrigen Imprägnierzusammensetzung ausreichenden Menge, und

iii) Wasser in einer zum Schaffen einer flüssigen Imprägnierzusammensetzung mit einer Viskosität im Bereich bis zu 20 mPa.s (cpse) und einem Gesamtfeststoffgehalt im Bereich von 1-25 Gew.-% ausreichenden Menge,

g) Härten des imprägnierten Bündels geschlichteter Endlosglasfasern, um ein Imprägniermittel mit verringerter Feuchtigkeit zu erhalten, das auf einem wesentlichen Teil der Oberflächen der geschlichteten Endlosfasern als Film vorhanden ist,

h) Sammeln des gehärteten, imprägnierten Bündels geschlichteter Endlosglasfasern als aufgewickelte Spule,

**dadurch gekennzeichnet,**

daß die getrockneten, geschlichteten Endlosglasfasern von der Spule entfernt werden und einer durcheinanderbringenden Kraft ausgesetzt werden, um vor dem Imprägnieren des Bündels viele der Fasern in dem Bündel voneinander zu trennen, und das Polymer von (i) eine Mischung von mindestens zwei elastomeren Polymeren ist, die im wesentlichen frei sind von Kohlenwasserstoffdien- und Chlorfunktionalität und die Filmeigenschaften aufweisen mit unterschiedlichem Dehnungsmodul bei gleicher prozentualer Dehnung, wobei die Menge der Mischung elastomerer Polymere in den Feststoffen größer ist als jeder andere einzelne Bestandteil, die Beschichtung in einem Ausmaß bis zu 10 Gew.-% oder weniger, bezogen auf Trockensubstanz, gehärtet wird und das Härten einen Film ergibt mit einem Modul bei 100% Dehnung im Bereich von 1.379-55.158 kPascal (200-8.000 psi) mit einer Shore A Härte von 10-100 und mit einer Dehnung von 100-800%.

14. Verwendung des flexiblen Glasfaserbündels nach Ansprüchen 1-13 zur Herstellung polymerbeschichteten Gewebes aus den Bündeln von Endlosfasern.

## Revendications

1. Botte souple de fibres de verre ensimées possédant module d'allongement d'au moins 48,265 x $10^9$ pascals et un allongement à la rupture inférieur à 5%, ces fibres de verre comportant sur elles un résidu à humidité réduite provenant d'une composition d'ensimage chimique aqueuse comprenant au moins un agent de protection des fibres de verre appliqué à chacune des fibres de verre et la botte comporte un agent d'imprégnation et de revêtement élastomère, partiellement durci, qui est un reste à humidité réduite provenant d'une composition d'imprégnation aqueuse, comprenant

i) un polymère élastomère , dispersible, émulsifiable ou soluble dans l'eau et

ii) une ou plusieurs matières de réticulation dispersibles, émulsifiables ou solubles dans l'eau, en une proportion efficace pour conférer un durcissement partiel au résidu, et iii) de l'eau en une proportion efficace pour donner une composition de revêtement et d' imprégnation pour les bottes de fibres de verre,

que l'on applique à la botte d'une multiplicité de fibres de verre,

caractérisée en ce que

la quantité d'agent d'imprégnation à humidité réduite sur la botte est supérieure à 5 pourcent en poids de la botte et résulte de la composition d'imprégnation aqueuse , où le polymère de (i) est choisi dans le groupe formé par les silicones, les fluorocaoutchoucs , les polymères de polysulfure, le caoutchouc d'étylène-propylène et les polyéthers et les mélanges d'au moins deux polymères,élastomères qui sont sensiblement exempts d'hydrocarbure diénique et de fonctionnalités chlore et qui possèdent des propriétés de film ou pellicule avec des modules d'allongement différents au même pourcentage d'allongement , où la quantité de polymère élastomère dans les solides est supérieure à n'importe quel autre composant individuel et où les matières de réticulation de (ii) sont présentes dans la composition d'imprégnation en une quantité efficace pour durcir le revêtement jusqu'à raison de 10 pourcent en poids ou moins, sur base des solides secs, par auto-réticulation , réticulation avec les polymères élastomères , ou un mélange de ceux-ci.

2. Botte souple de fibres de verre suivant la revendication 1,
   caractérisée en ce que
   la composition aqueuse d'imprégnation comprend un ou plusieurs plastifiants dispersibles, émulsifiables ou solubles dans l'eau.

3. Botte souple de fibres de verre, suivant les revendications 1 et,
   caractérisée en ce que
   la composition d'imprégnation aqueuse comprend un ou plusieurs agents de couplage silaniques.

4. Botte souple de fibres de verre suivant les revendications 1 à 3,
   caractérisée en ce que
   le résidu partiellement durci, à humidité réduite, de la composition d'imprégnation enveloppe également la botte de fibres.

5. Botte souple de fibres de verre suivant les revendications 1 à 4,
   caractérisée en ce que
   la composition d'imprégnation aqueuse comporte la matière de réticulation qui est auto-réticulante en une proportion suffisante pour conférer un durcissement partiel au résidu de manière à ce qu'il en résulte un résidu possédant un module à 100% d'allongement d'une pellicule coulée de la composition de revêtement et d'imprégnation aqueuse, de l'ordre de 1.379 à 55.158 kpascals, avec une dureté Shore A 60 à A 100 et avec un allongement de 100 à 800%.

6. Botte souple de fibres de verre suivant les revendications 1 à 4,
   caractérisée en ce que
   le résidu de la composition d'imprégnation possède une dureté qui varie de Shore A 10 à Shore D 80 et un module à 500% d'allongement de 3.447 à 27.580 kpascals.

7. Botte souple de fibres de verre suivant les revendications 1 à 6,
   caractérisée en ce que
   la matière de réticulation est constituée d'une ou de plusieurs résines de condensation donneuses de méthylène, et les résines sont choisies dans le groupe constitué par les résines de résorcinol-formaldéhyde, les résines de phénol-formaldéhyde, les résines de mélamine-formaldéhyde et leurs mélanges.

8. Botte souple de fibres de verre suivant les revendications 1 à 6,
   caractérisée en ce que
   lorsque le polymère élastomère est un polymère de silicone, la matière de réticulation est choisie dans le groupe formé par les composés à fonctions acétoxy, cétoxime ou alcoxy.

9. Botte souple de fibres de verre suivant les revendications 1 à 8,
   caractérisée en ce que
   la composition d'imprégnation et de revêtement aqueuse comporte une ou plusieurs cires microcristallines dispersibles ou émulsifiables dans l'eau.

10. Botte souple de fibres de verre suivant les revendications 1 à 9,
    caractérisée en ce que
    la proportion efficace d'eau dans la composition d'imprégnation destiné à imprégner le faisceau, qui possède une viscosité variant dans la plage allant jusqu'à 20 mPa et une teneur totale en solides qui fluctue de 1 à 25% en poids.

11. Botte souple de fibres suivant les revendications 1 à 10,
    caractérisée en ce que
    les fibres de verre sont ensimées à l'aide d'une composition d'ensimage aqueuse qui est une composition ne contenant pas d'amidon , comportant de 0,5 à 5 pourcent en poids d'un ou plusieurs polyols de poids moléculaire élevé , dispersibles dans l'eau, choisis dans le groupe formé par les polyoxyalkylène polyols et les polyalkylène polyols possédant un poids moléculaire moyen de 300 à 12.000 et leurs mélanges, présents en tant qu'agents filmogènes ou feuillogènes souples, et de 0,1 à 2 pourcent en poids d'un ou de plusieurs agents de couplage silaniques , et de 0,1 à 4 pourcent en poids d'un lubrifiant cationique , ainsi que de l'eau en une proportion telle qu'elle donne une teneur totale en solides à la composition aqueuse, qui fluctue de 3 à 20 pourcent en poids.

12. Botte souple de fibres suivant la revendication 11,
    caractérisée en ce que
    un agent antistatique est présent dans la composition d'ensimage chimique aqueuse.

13. Procédé de production de bottes souples imprégnées de filaments de verre ensimés, comprenant :
    a) la formation d'une multiplicité de filaments de verre étirés à partir de verre fondu par les orifices d'une filière d'un four de fusion d'un mélange ou composition vitrifiable ,

b) l'application aux filaments de fibres de verre formés d'une composition d'ensimage aqueuse ne contenant pas d'amidon , possédant un mélange 50/50 d'un polyalkylène polyol et d'un polyoxyalkylène polyol, dans lequel les polyols possèdent un poids moléculaire moyen de 300 à 23.000 et où le mélange est présent en une proportion de 0,5 à 5 pourcent en poids de la composition d'ensimage aqueuse , 1' agent de couplage silanique est présent à raison de 0,1 à 2 pourcent en poids de la composition d'ensimage aqueuse , un lubrifiant de polyamine amide d'acide gras acidifié cationique est présent en une proportion de 0,01 à 4 pourcent en poids de la composition d'ensimage aqueuse , où la proportion totale de solides de la composition d'ensimage aqueuse varie de 3 à 20 pourcent en poids ,

c) le rassemblement des filaments de verre ensimés en une ou plusieurs bottes de filaments,

d) la collecte de la ou des bottes sur un enrouleur , sous la forme d'un paquet enroulé d'une ou plusieurs bottes de filaments ensimés ,

e) le séchage des paquets de bottes de filaments pour réduire l'humidité sur les filaments de verre et former un résidu séché de la composition d'ensimage aqueuse sur des parties substantielles des surfaces des filaments dans le paquet , où le résidu à humidité réduite est présent sur les fibres de verre en une proportion de 0,1 à 2 pourcent sur base du poids des fibres de verre ensimées ,

f) l'imprégnation de la botte des filaments de verre séchée par une composition d'imprégnation aqueuse possédant

i) un polymère élastomère, émulsifiable, dispersible ou soluble dans l'eau,

ii) une ou plusieurs matières de réticulation émulsifiables, dispersibles ou solubles dans l'eau, présentes en une proportion efficace pour conférer une réticulation partielle au résidu à humidité réduite de la composition d'imprégnation aqueuse , et

iii) de l'eau en une proportion efficace pour engendrer une composition d'imprégnation liquide possédant une viscosité qui s'étend jusqu'à 20 mPa.s et d'une teneur totale en solides qui varie de 1 à 25 pourcent en poids,

g) le durcissement de la botte imprégnée de filaments de verre ensimés , de façon à obtenir la présence sur une partie substantielle des surfaces des filaments ensimés , d'un agent d'imprégnation à humidité réduite, sous la forme d'une pellicule ou d'un feuil ,

h) la collecte de la botte imprégnée durcie-de filaments de verre ensimés ,sous forme d'un paquet enroulé ,

caractérisé en ce que

on retire les filaments de verre ensimés séchés du paquet et on les soumet à une force de perturbation pour séparer des fibres dans la botte les unes des autres avant l'imprégnation de la botte, et le polymère de (i) est un mélange d'au moins deux polymères élastomères qui sont sensiblement exempts d'hydrocarbures diénique et de fonctionnalités chlore et qui possèdent des propriétés de pellicule ou de film avec différents modules d'allongement au même pourcentage d'allongement, où la proportion du mélange des polymères élastomères dans les solides est supérieure à n'importe quel autre composant individuel, le revêtement est durée jusqu'à 10% en poids ou moins sur base de solides secs et le durcissement donne une pellicule avec un module à 100M d'allongement qui fluctue de 1.370 à 55.158 kpascals avec une dureté Shore de A 10 à 100 et avec un allongement de 100 à 800%.

14. Utilisation de la botte souple de fibres suivant les revendications 1 à 13 en vue de produire un tissu polymère revêtu, fabriqué à partir des bottes de filaments.

*FIG. 1*

FIG.2